# EUROPÄISCHE PATENTSCHRIFT

(11) **EP 2 099 552 B1**
(45) Veröffentlichungstag und Bekanntmachung des Hinweises auf die Patenterteilung: **03.10.2018**
(21) Anmeldenummer: 07847943.3
(22) Anmeldetag: 06.12.2007
(51) Int. Cl.: B01D 53/86, B01J 23/889

(54) **REINIGUNGSANLAGE FÜR GASE**
PURIFICATION APPARATUS FOR GASES
INSTALLATION DE NETTOYAGE POUR GAZ

(30) Priorität: 07.12.2006 DE 102006058082
(43) Veröffentlichungstag der Anmeldung: 16.09.2009
(73) Patentinhaber: Beko Technologies GmbH, 41468 Neuss (DE)
(72) Erfinder: PARUSEL, Franz, Josef, 40764 Langenfeld (DE)
(74) Vertreter: Bauer, Wulf
(86) Internationale Anmeldenummer: PCT/EP2007/063475
(87) Internationale Veröffentlichungsnummer: WO 2008/068318

(56) Entgegenhaltungen:
- WO-A-00/25901
- WO-A-97/22401
- DE-C- 10 008 609
- FR-A- 2 640 889
- US-A- 4 045 538
- US-A- 5 114 692
- US-A- 5 229 071

## Beschreibung

Die vorliegende Erfindung betrifft eine Reinigungsanlage zur Abtrennung von Kohlenwasserstoffen aus einem Gas.

Bei der Verdichtung von Gasen, beispielsweise bei der Erzeugung von Druckluft wird das komprimierte Gas nahezu unvermeidbar mit Ölaerosolen und Öldampf verunreinigt. Es können beispielsweise Schmierstoffe, Öle, anthropogene Luftinhaltsstoffe, Schwefeldioxid, Kohlenmonoxyd und nitrogene Gase in das Gas oder die Druckluft eingetragen werden. Diese Inhaltsstoffe können in Gas-, Dampf- und Ölaerosolform vorliegen.

Für eine Vielzahl von Anwendungen sind derartige Verunreinigungen unerwünscht oder sogar unakzeptabel.

Derzeit sind keine Kompressoren bekannt, die ohne zusätzliche Aufbereitung ölfreie Druckgase, insbesondere ölfreie Druckluft erzeugen können. Es sind zwar Kompressoren erhältlich, die das Gas oder die Druckluft ölfrei verdichten, jedoch erzeugen auch diese keine Druckluft, die nicht zumindest geringe Bestandteile an beispielsweise organischen Verunreinigungen aufweist. Dies ergibt sich daraus, dass Kompressoren Verunreinigungen aus der Umgebungsluft aufnehmen und deren Lager und Wellen geschmiert sein müssen und somit ebenfalls flüchtige Bestandteile an die umgebende Atmosphäre abgeben.

Aus diesem Grund werden üblicherweise nachgeschaltete Filteranlagen eingesetzt, die die Qualität der Druckluft gewährleisten sollen. Bekannt sind im Wesentlichen Absorptionsfilter aus Aktivkohle, die jedoch eine geringe Lebensdauer haben.

Die US 5,284,629 A beschreibt ein Verfahren zur Entfernung von Kompressoröl aus Druckluft, bei dem die Druckluft durch einen Behälter geleitet wird, in welchem sich eine Schicht aus einem Oxidationskatalysator befindet. Als Katalysatormaterial sind metallische Komponenten aus der Gruppe Platin, Palladium, Nickel, Kobalt, Eisen, Rhodium, Mangan und Kupfer genannt.

Die US 5,114,692 A beschreibt ein Verfahren zur destruktiven Oxidation von organisch toxischen Chemikalien zu nichtgiftigen Produkten, bei dem die Chemikalien in Gegenwart von Sauerstoff mit einem Katalysator in Kontakt gebracht werden. Der Katalysator besteht aus Alkalimetallcarbonaten oder Alkalimetallbicarbonaten und beinhaltet Metalle (z.B. Mangan oder Eisen) oder Metalloxide (Nickeloxid oder Kobaltoxid) oder ist durch sie imprägniert.

Weiterhin beschreibt die DE 100 08 609 C1 ein ähnliches Verfahren, bei dem als Oxidationskatalysator ein Hopcalitmaterial eingesetzt wird. Hopcalit ist die Bezeichnung für Misch-Katalysatoren, die hauptsächlich aus Mangandioxid und Kupfer(II)-oxid bestehen. Daneben können sie weitere Metalloxide enthalten, beispielsweise Kobaltoxide und Silber(I)-oxid.

Die WO 00/25901 A1 beschreibt ein Verfahren zur Reduzierung von volatil organischen Bestandteilen in einem Gasstrom, bei dem der Gasstrom bei einer Temperatur von 50 °C bis circa 150 °C ein Katalysatorbett aus Mangandioxid, Eisenoxid und Kaliumoxid durchströmt.

Hopcalite katalysieren die Oxidation von giftigem Kohlenmonoxid (CO) zum relativ harmlosen Kohlendioxid (CO₂) durch (Luft-)Sauerstoff (O₂) bei Raumtemperatur. Deswegen werden sie in den Filtern von Gasmasken und anderen Atemschutzgeräten verwendet. Daneben katalysieren Hopcalite die Oxidation verschiedener organischer Verbindungen bei erhöhter Temperatur (200-500°C). Zusammensetzungen sind beispielsweise 60% MnO₂ / 40% CuO oder 50% MnO₂ / 30 % CuO / 15% CoO und 5% Ag2O.

Obwohl Hopcalit Katalysatoren schon seit Jahrzehnten in der Praxis verwendet werden, sind viele Fragen bezüglich ihrer Wirkungsweise noch offen. Das liegt an der Komplexität der Systeme, die es erschwert, Informationen über die aktiven Zentren und die Mechanismen der Katalyse und Deaktivierung zu erhalten. Auf jeden Fall ist dieses Material in der Lage, Ölbestandteile und flüchtige organische Verbindungen aus Druckgasen zu entfernen bzw. abzutrennen und ist dabei unempfindlich gegen Vergiftung durch Phosphor, Schwefel, Zink und andere übliche Öladditive. Wie auch in der DE 100 08 609 beschrieben, wird das Katalysatormaterial üblicherweise mit Hilfe einer Heizeinrichtung erwärmt, um eine erwünschte Arbeits- oder Betriebstemperatur zu erreichen. Die optimale Arbeitstemperatur liegt bei etwa 130 bis 150° C.

Bekannt sind Reinigungsanlagen mit einem Heizstab, der innerhalb des Behälters angeordnet ist und mit dem Katalysatormaterial in Kontakt befindet. Je nach Ausführung kann der Heizstab eine Länge aufweisen, die in etwa der Länge des Behälters entspricht und sich somit mehr oder weniger durch das gesamte Katalysatormaterial hindurch erstrecken, bekannt sind aber auch Anordnungen, bei denen Heizstäbe nur einen geringen Anteil in das Katalysatormaterial hineinragen.

Für eine qualitativ hochwertige Reinigung des Gases ist es notwendig, dass das gesamte Katalysatormaterial im Wesentlichen die gleiche Temperatur aufweist. Da das Katalysatormaterial in der Regel eine nur sehr geringe Wärmeleitfähigkeit aufweist, weisen die Heizstäbe meist eine Temperatur oberhalb der eigentlichen Betriebstemperatur auf. Dies ist insbesondere auch bei Hopcalit der Fall. Die höhere Temperatur im Bereich des Heizstabes führt insgesamt zu einer ungleichmäßigen Temperaturverteilung innerhalb des Katalysatormaterials. Dies wiederum kann eine ungleichmäßige Reaktion zur Folge haben, was insbesondere beim Anfahren der Reinigungsanlage, also bevor sich die Wärme gleichmäßig verteilen kann, der Fall ist. Alternativ oder zusätzlich zur Verwendung von Heizstäben sind Heizungen bekannt, die den zugeführten Gasstrom vor dem Eintritt in die Reinigungsanlage erwärmen. Nachteilig dabei ist aber, dass sich der Gasstrom beim Hindurchströmen durch den Behälter abkühlt und somit in der Nähe des Austritts eine geringere Temperatur als am Eintritt in den Behälter aufweist. Auch dies kann zu ungleichmäßigen Reaktionen führen. Der Gasstrom wird wegen der Abkühlung in der Regel überhitzt, was zusätzlich einen relativ hohen Energieaufwand zur Folge hat. Dies gilt insbesondere dann, wenn der kalte Behälter angefahren wird.

Es hat sich auch gezeigt, dass sich in der Nähe der Heizstäbe auch bei einer vorgeschalteten Heizung im Bereich des Gaseintritts in den Behälter so genannte Wärmenester mit deutlich höherer Temperatur ausbilden können. Diese können Temperaturen erreichen, die sogar eine Selbstzündung oder Entflammung des Öls oder Katalysatormaterials verursachen können. Die Entflammung des Öls setzt bei etwa 250 bis 300° C ein. Die Gefahr einer Entflammung muss aber unbedingt verhindert werden, weswegen üblicherweise Temperaturfühler vorgesehen sind, die die Anlage bei einem Temperaturanstieg über eine gewisse Temperaturschwelle abschalten oder zumindest einen Alarm auslösen.

Schließlich besteht ein weiterer Nachteil bekannter Reinigungsanlagen darin, dass diese einen überdurchschnittlich hohen Anfall von Kohlenwasserstoffen im Gasstrom nicht abscheiden können und somit an nachgeschaltete Anlagen weitergeben. Dies kann erhebliche negative Folgen für die nachgeschalteten Anlagen haben, je nach Verwendung des gereinigten Gases können auch Nachteile für Mensch und Tier entstehen.

Die Aufgabe der vorliegenden Erfindung besteht darin, eine Reinigungsanlage hoher Effektivität zu schaffen, die insbesondere auch hohen Sicherheitsanforderungen gerecht wird. Die Reinigungsanlage soll kostengünstig herstellbar sein und einen gleichmäßigen Betrieb bzw. eine sichere Abtrennung von Kohlenwasserstoffen gewährleisten. Weiterhin besteht die Aufgabe der vorliegenden Erfindung darin, ein entsprechendes Verfahren zur Abtrennung von Kohlenwasserstoffen bereitzustellen.

Erfindungsgemäß wird die Aufgabe durch eine Reinigungsanlage nach Anspruch 1 und ein Verfahren nach Anspruch 6 gelöst.

Die Erwärmung des Katalysatormaterials von außen durch das Konvertergehäuse hindurch hat den wesentlichen Vorteil, dass eine gleichmäßigere Wärmeverteilung erreicht werden kann. Durch die wesentlich größere zur Verfügung stehende Fläche kann die zur Erhöhung der Temperatur auf ein bestimmtes Niveau notwendige Wärmeenergie je Flächeneinheit deutlich verringert werden. Es bietet sich in einer besonders vorteilhaften Ausführungsvariante an, das Konvertergehäuse, mit einer Bandheizung zu umwickeln. Bei einem zylindrischen Behälter erfolgt der Wärmeeintrag dann vorzugsweise über nahezu die gesamte Mantelfläche des Behälters. Die große zur Wärmeübertragung nutzbare Fläche hat den Vorteil, dass die Wahrscheinlichkeit von punktueller Temperaturerhöhung (Wärmenester) und damit die Gefahr der Selbstzündung oder Entflammung des Öls deutlich verringert wird.

Anstelle einer Bandheizung ist auch jede andere geeignete Wärmequelle oder Heizung einsetzbar, wesentlich ist, dass der Wärmeeintrag über die möglichst große Außenfläche erfolgt. Denkbar ist unter anderem auch der Einsatz einer Mantelheizung, einer Heizmanschette oder eines Ringheizkörpers. Erfindungsgemäß wird die Erwärmung von außen auch mit einer Erwärmung innerhalb des Behälters kombiniert. In diesem Fall kann die Leistung eines Heizstabs, der sich beispielsweise zentral durch den Behälter erstreckt, deutlich verringert werden, was wiederum die Gefahr von unkontrollierbaren Temperaturerhöhungen verringert.

Als Katalysatormaterial eignet sich insbesondere die Verwendung von Hopcalit. Aus Kostengründen hat sich der Einsatz von mit Hopcalit beschichteten Kugeln aus Aluminiumoxid bewährt.

Erfindungsgemäß wird entgegen der vorherrschenden Meinung ein Katalysatormaterial eingesetzt, das zumindest zum Teil aus reinem Hopcalit besteht. Der Einsatz von reinem Hopcalit führt nämlich dazu, dass bei einem erhöhten Kohlenwasserstoffeintrag die Reaktionstemperatur innerhalb des Behälters im Bereich des reinen Hopcalitmaterials sprunghaft ansteigt. Dieser Temperaturanstieg kann mit entsprechenden Temperaturfühlern registriert werden, um ein Weiterleiten der Kohlenwasserstoffe an weitere Anlagen bzw. zur Weiterverwendung des Gases durch Abschalten der Reinigungsanlage zu verhindern. Bei einem Störfall dient der Temperaturanstieg im Hopcalit als Signal oder Anlass für eine Abschaltung der Anlage und/oder eine eindeutige Absperrung des Trägergases, um den Verbrennungsprozess zu unterbrechen (z.B. durch Sauerstoffmangel). Aufgrund der erhöhten Temperatur wird erfindungsgemäß ein Alarmsignal ausgegeben oder die Reinigungsanlage sofort abgeschaltet. Dieser Effekt des sprunghaften Temperaturanstiegs tritt bei der Verwendung von lediglich beschichteten Kugeln aufgrund der geringeren Menge an Hopcalit nicht auf.

Alternativ können dem Katalysatormaterial aber andere Stoffe zugemischt werden, wesentlich ist nur, dass sie bei erhöhtem Kohlenwasserstoffeintrag zu einer Erhöhung der Reaktionstemperatur innerhalb des Behälters führen.

Die Zumengung des entsprechenden Materials, vorzugsweise des reinen Hopcalits kann durch eine schichtweise Anordnung innerhalb des Konvertergehäuses erfolgen. Damit ist gemeint, dass in Strömungsrichtung eine Schicht des Katalysatormaterials, die sich über den gesamten Querschnitt des Behälters erstreckt aus reinen Hopcalit gebildet ist. Alternativ können aber auch mehrere dieser Schichten vorgesehen sein.

Ebenfalls sinnvoll kann eine Beimengung von reinem Hopcalit zum ansonsten nicht reinen Katalysatormaterial sein. Ebenfalls denkbar ist, dass auch ein Katalysatormaterial, das keine Bestandteile an Hopcalit aufweist mit ausreichenden Anteilen an Hopcalit vermischt wird.

Grundsätzlich ergibt sich der sprunghafte Temperaturanstieg nicht nur bei kugelförmigem Katalysatormaterial, sondern auch bei anderen Formen oder Ausführungen des Katalysatormaterials. Beispielsweise ist ein poröser Körper denkbar, der vom zu reinigende Gas durchströmt wird. Der erfindungsgemäße Gedanke, Hopcalit als Indikator für einen Temperaturanstieg einzusetzen, kann also grundsätzlich mit jeder Form des Katalysatormaterials realisiert werden.

Die Erfindung wird anhand der nachfolgenden Figurenbeschreibung näher erläutert. Das darin gezeigte Ausführungsbeispiel stellt nur eine mögliche Variante zur Realisierung der Erfindung dar und dient dem besseren Verständnis, weswegen die Erfindung nicht auf dieses Ausführungsbeispiel beschränkt sein soll.

Es zeigen:
Fig. 1: eine erfindungsgemäße Reinigungsanlage in perspektivischer Darstellung,
Fig. 2: ein Funktionsschema der erfindungsgemäßen Reinigungsanlage.

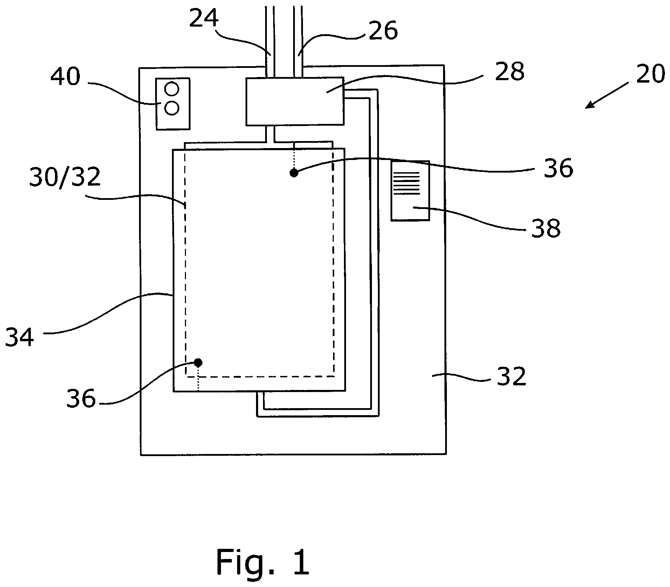

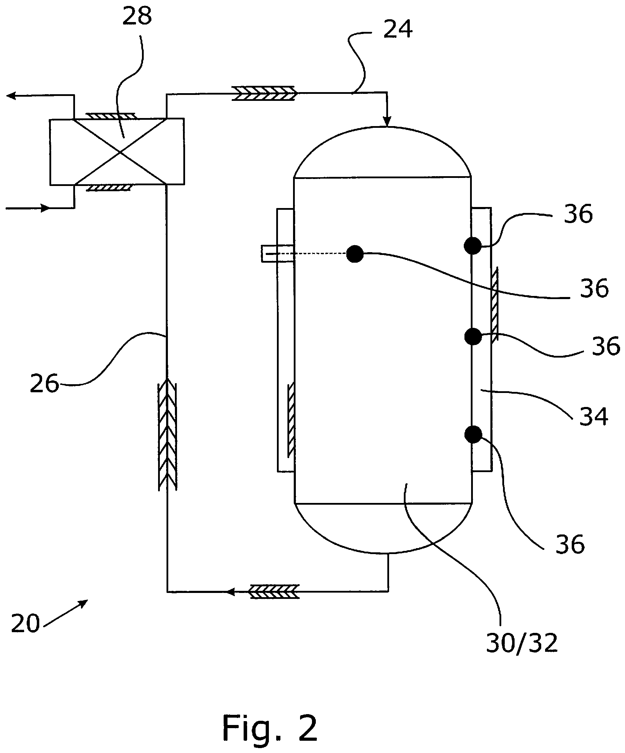

Gemäß der Figuren 1 und 2 ist eine erfindungsgemäße Reinigungsanlage 20 üblicherweise in einem Gehäuse 22 untergebracht. Das zu reinigende Gas, vorzugsweise Druckluft, wird über eine Zufuhrleitung 24 zugeführt und über eine Abfuhrleitung 26 abgeleitet. Üblicherweise wird eine erfindungsgemäße Reinigungsanlage 20 hinter Kompressoren (nicht dargestellt) installiert, eine Verwendung als Endstellengerät unmittelbar im Bereich der Nutzung der gereinigten Druckluft ist aber ebenfalls möglich. Die Reinigungsanlage 20 kann hinter Kompressoren beliebiger Bauart (Kolbenkompressoren, Schraubenkompressoren usw.) installiert und betrieben werden, sofern die jeweiligen Betriebsbedingungen beachtet werden. Im Sinne einer hohen energetischen Effizienz werden Wärmetauschersysteme verwendet, die eine Rückführung der austretenden thermischen Energie in das System ermöglichen. Der Anteil an zusätzlich zuzuführender Energie vermindert sich nach einer anfänglichen Aufheizphase dementsprechend.

Die Zufuhrleitung 24 leitet das zu reinigende Gas also zunächst durch einen Wärmetauscher 28, vorzugsweise ausgeführt als Plattenwärmetauscher. Danach gelangt es in einen Konverter 30, der mit nicht dargestelltem Katalysatormaterial gefüllt ist. Der Konverter 30 weißt im gezeigten Ausführungsbeispiel ein zylinderförmiges Konvertergehäuse 32 auf, dass vom zu reinigenden Gas in Längsrichtung durchströmt wird.

Als Katalysatormaterial zur Abtrennung von Kohlenwasserstoffen kann beispielsweise Hopcalit verwendet werden, das vorzugsweise in Form von Kugeln mit einem Durchmesser von etwa 1 bis 5 mm eingesetzt wird. Grundsätzlich ist aber auch jede andere Form denkbar.

Erfindungsgemäß wird das Konvertergehäuse 32 und damit das Katalysatormaterial mit Hilfe einer Wärmequelle bzw. Heizung 34 von außen erwärmt, bis die notwendige Betriebstemperatur erreicht ist. Grundsätzlich ist die Art der Heizung 34 frei wählbar, die Verwendung einer Bandheizung, die um das Konvertergehäuse 32 gewickelt wird, hat sich aber als sehr geeignet erwiesen. Eine solche Bandheizung weist bei Durchfluss elektrischen Stroms sich erwärmende Metallstreifen auf, die von einem Textil- oder Kunststoffmaterial umgeben sind. Somit wird die erzeugte Wärme unmittelbar an die gesamte Außenfläche des Konvertergehäuses 32 und dann an das Katalysatormaterial abgegeben.

Zur Überwachung der Temperatur im Inneren des Konvertergehäuses sind Temperaturfühler 36 vorgesehen, die sich vorzugsweise im Zu- und Abströmungsbereich des Konvertergehäuses 32 und gegebenenfalls in der Mitte des Konvertergehäuses 32 befinden (vgl. insbesondere Fig. 2). Zur Visualisierung des Messergebnisses können in entsprechende Anzeigen 38 an der Außenseite des Gehäuses 22 der Reinigungsanlage 20 vorgesehen sein. Wird eine zu hohe Temperatur erreicht, wird erfindungsgemäß entweder die Reinigungsanlage 20 sofort abgeschaltet oder es kann ein Alarmsignal erfolgen.

Die Reinigungsanlage 20 beinhaltet weiterhin eine Temperatursteuereinheit 40, die ebenfalls von außen zugänglich ist und über die die Reinigungsanlage 20 eingestellt und gesteuert werden kann.

Erfindungsgemäß kann eine Anreicherung des Katalysatormaterials mit reinem Hopcalit vorgesehen sein. Entweder beinhaltet das Konvertergehäuse 32 Schichten reinen Hopcalits oder das reine Hopcalit ist dem Katalysatormaterial beigemengt und im Wesentlichen gleichmäßig im Konvertergehäuse 32 verteilt. Das reine Hopcalit führt bei einem erhöhten Anfall von Kohlenwasserstoffen zu einem sprunghaften Temperaturanstieg, der von den Temperaturfühlern 36 registriert wird.

Die erfindungsgemäße Reinigungsanlage arbeitet mit einem katalytischen System, das speziell für die Totaloxidation von Kohlenwasserstoffen (Schmierstoffen, Ölen, anthropogene Luftinhaltsstoffen, u.a. Schwefeldioxid, Kohlenmonoxid, nitrogene Gase) in Druckgas, speziell Druckluft entwickelt und optimiert wurde. Die Luftinhaltsstoffe können in Gas-, Dampf- und Aerosolform vorliegen und werden innerhalb der Reinigungsanlage zu Kohlendioxid und Wasser umgewandelt. Die vom Kompressor eingehende ölbeladene Luft hat üblicherweise eine Temperatur von etwa 10 Grad über Umgebungstemperatur. Diese wird im Wärmetauscher 28 durch die heiße Luft aus dem Konvertergehäuse 32 auf Temperaturen von 100 bis 130 °C vorgewärmt. Anschließend strömt sie in das Konvertergehäuse 32 und durchströmt dort das Katalysatormaterial bei einer eingestellten Betriebstemperatur von etwa 150°C. Innerhalb des Konvertergehäuses werden die in der Luft enthaltenen Kohlenwasserstoffe dann katalytisch mittels Luftsauerstoff oxidiert. Die dabei anfallende Reaktionswärme ist bei dem in Druckluft üblichen Kohlenwasserstoffkonzentrationen vernachlässigbar gering. Die gereinigte Druckluft wird anschließend im Wärmetauscher 28 auf eine Temperatur von ca. 10 bis 15 °C über Eintritt abgekühlt.

Die Erfindung ist nicht auf das beschriebene Ausführungsbeispiel beschränkt, sondern umfasst auch weitere, gleich wirkende oder sich aus der Erfindung unmittelbar ergebende Ausführungsformen.

## Patentansprüche

1. Reinigungsanlage (20) zur Abtrennung von Kohlenwasserstoffen aus einem Gas, mit einem zur Durchleitung von Gasen geeigneten Konvertergehäuse (32), einem darin angeordneten Katalysatormaterial, das mit Hilfe einer Wärmequelle (34) von außerhalb des Konvertergehäuses (32) erwärmt wird, und mindestens einem Temperaturfühler (36), der die Temperatur des Hopcalits ermittelt, **dadurch gekennzeichnet, dass**
- zusätzlich eine Wärmequelle im Inneren des Konvertergehäuses angeordnet ist,
- das Katalysatormaterial Kugeln aus Aluminiumoxid, die mit Hopcalit beschichtet sind, sowie reines Hopcalit enthält,
- die Reinigungsanlage (20) derart ausgeführt ist, dass sie sich abschaltet oder ein Alarmsignal ausgegeben wird, wenn ein sprunghafter Temperaturanstieg von dem Temperaturfühler registriert wird.

2. Reinigungsanlage nach Anspruch 1, **dadurch gekennzeichnet, dass** die Wärmequelle (34) durch eine Heizung gebildet ist, die das Konvertergehäuse (32) umgibt.

3. Reinigungsanlage (20) nach Anspruch 1, **dadurch gekennzeichnet, dass** die innere Wärmequelle durch einen Heizstab gebildet ist.

4. Reinigungsanlage (20) nach einem der Ansprüche 1 bis 4, **dadurch gekennzeichnet, dass** das Konvertergehäuse (32) mindestens eine Schicht an Katalysatormaterial aus reinem Hopcalit beinhaltet, die sich über den gesamten Querschnitt des Inneren des Konvertergehäuses (32) erstreckt.

5. Reinigungsanlage (20) nach einem der Ansprüche 1 bis 5, **dadurch gekennzeichnet, dass** das Konvertergehäuse (32) ein Katalysatormaterial beinhaltet, dem Hopcalit beigemengt ist

6. Verfahren zur Abtrennung von Kohlenwasserstoffen aus einem Gas und zur Ermittlung eines erhöhten Kohlenwasserstoffeintrags, einer Reinigungsanlage (20) mit einem zur Durchleitung von Gasen geeigneten Konvertergehäuse (32), einem darin angeordneten Katalysatormaterial und mindestens einem Temperaturfühler (36), **gekennzeichnet durch** die Verfahrensschritte
- Erwärmen des Katalysatormaterials mit Hilfe einer Wärmequelle von außerhalb des Konvertergehäuses (32) und einer Wärmequelle, die im Innern des Konvertergehäuses (32) angeordnet ist,
- Durchleiten eines Gases durch innerhalb des Konvertergehäuses (32) angeordnetes Katalysatormaterial bestehend aus mit Hopcalit beschichteten Kugeln aus Aluminiumoxid und reinem Hopcalit,
- Messen der Temperatur des Hopcalits mit Hilfe des Temperaturfühlers (36),
- Ausgeben eines Alarmsignals oder sofortiges Abschalten der Reinigungsanlage (20) bei sprunghafter Erwärmung des Hopcalits.

## Claims

1. A purification unit (20) for separating hydrocarbons from a gas, comprising a converter housing (32) suitable for conducting gases therethrough, a catalyst material which is disposed therein and which is heated from the outside of the converter housing (32) by means of a heat source (34), and at least one temperature sensor (36) that determines the temperature of the hopcalite, **characterized in that**
- a heat source is additionally disposed in the interior of the converter housing,
- the catalyst material includes pellets of aluminum oxide coated with hopcalite as well as pure hopcalite,
- the purification unit (20) is configured in such a way that it turns itself off or an alarm signal is output if an abrupt temperature increase is detected by the temperature sensor.

2. The purification unit according to claim 1, **characterized in that** the heat source (34) is formed by a heating system surrounding the converter housing (32).

3. The purification unit (20) according to claim 1, **characterized in that** the inner heat source is formed by a heater rod.

4. The purification unit (20) according to one of the claims 1 to 4, **characterized in that** the converter housing (32) comprises at least one layer of the catalyst material formed of pure hopcalite, which extends over the entire cross section of the interior of the converter housing (32).

5. The purification unit (20) according to one of the claims 1 to 5, **characterized in that** the converter housing (32) contains a catalyst material to which hopcalite has been admixed.

6. A method for separating hydrocarbons from a gas and for determining an increased hydrocarbon input, in a purification unit (20) with a converter housing (32) suitable for conducting gases therethrough, a catalyst material disposed therein and at least one temperature sensor (36), **characterized by** the method steps
- heating the catalyst material by means of a heat source from the outside of the converter housing (32) and a heat source disposed in the interior of the converter housing (32),
- conducting a gas through a catalyst material disposed within the converter housing (32), which consists of hopcalite-coated pellets of aluminum oxide and pure hopcalite,
- measuring the temperature of the hopcalite using the temperature sensor (36),
- outputting an alarm signal or immediately turning off the purification unit (20) in the case of the hopcalite heating up abruptly.

## Revendications

1. Installation de nettoyage (20) destiné à séparer les hydrocarbures d'un gaz, comprenant un boîtier de convertisseur (32) adapté à y faire passer des gaz, un matériau catalyseur qui est disposé à l'intérieur de celui-ci et est chauffé à l'aide d'une source de chaleur (34) depuis l'extérieur du boîtier de convertisseur (32), ainsi qu'au moins un palpeur de température (36) qui détermine la température de l'hopcalite, **caractérisée par le fait que**,
- en plus, une source de chaleur est disposée à l'intérieur du boîtier de convertisseur,
- le matériau catalyseur contient des billes en oxyde d'aluminium qui sont recouvertes d'hopcalite, ainsi que de l'hopcalite pur,
- ladite installation de nettoyage (20) est conçue de telle sorte qu'elle s'arrête ou qu'un signal d'alarme est délivré lorsqu'une montée brusque en température est enregistrée par le palpeur de température.

2. Installation de nettoyage selon la revendication 1, **caractérisée par le fait que** la source de chaleur (34) est constituée par un chauffage qui entoure ledit boîtier de convertisseur (32).

3. Installation de nettoyage (20) selon la revendication 1, **caractérisée par le fait que** la source de chaleur intérieure est constituée par une barre chauffante.

4. Installation de nettoyage (20) selon l'une quelconque des revendications 1 à 3, **caractérisée par le fait que** le boîtier de convertisseur (32) comprend au moins une couche de matériau catalyseur en hopcalite pur qui s'étend sur l'ensemble de la section transversale de l'intérieur du boîtier de convertisseur (32).

5. Installation de nettoyage (20) selon l'une quelconque des revendications 1 à 4, **caractérisée par le fait que** le boîtier de convertisseur (32) comprend un matériau catalyseur auquel est mélangé de l'hopcalite.

6. Procédé de séparation d'hydrocarbures d'un gaz et de détermination d'un apport d'hydrocarbures augmenté dans une installation de nettoyage (20) comprenant un boîtier de convertisseur (32) adapté à y faire passer des gaz, un matériau catalyseur qui est disposé à l'intérieur de celui-ci et au moins un palpeur de température (36), **caractérisé par** les étapes de procédé consistant à
- chauffer le matériau catalyseur à l'aide d'une source de chaleur depuis l'extérieur du boîtier de convertisseur (32) et d'une source de chaleur qui est disposée dans l'intérieur du boîtier de convertisseur (32),
- faire passer un gaz à travers du matériau catalyseur disposé à l'intérieur du boîtier de convertisseur (32) et se composant de billes en oxyde d'aluminium recouvertes d'hopcalite ainsi que d'hopcalite pur,
- mesurer la température de l'hopcalite à l'aide du palpeur de température (36),
- délivrer un signal d'alarme ou arrêter immédiatement l'installation de nettoyage (20) lorsque l'hopcalite s'échauffe brusquement.
